Europäisches Patentamt

European Patent Office

Office européen des brevets

(19)

(11)    **EP 1 185 992 B1**

(12)    **EUROPÄISCHE PATENTSCHRIFT**

(45) Veröffentlichungstag und Bekanntmachung des Hinweises auf die Patenterteilung:
**28.01.2004   Patentblatt 2004/05**

(51) Int Cl.[7]: **H01G 9/20**

(21) Anmeldenummer: **00940191.0**

(22) Anmeldetag: **15.05.2000**

(86) Internationale Anmeldenummer:
**PCT/DE2000/001554**

(87) Internationale Veröffentlichungsnummer:
**WO 2000/072340 (30.11.2000 Gazette 2000/48)**

(54) **PHOTOVOLTAISCH SELBSTLADENDES SPEICHERSYSTEM**

PHOTOVOLTAICALLY SELF-CHARGING STORAGE SYSTEM

SYSTEME ACCUMULATEUR A AUTOCHARGE PHOTOVOLTAIQUE

(84) Benannte Vertragsstaaten:
**AT BE CH CY DE DK ES FI FR GB GR IE IT LI LU MC NL PT SE**

(30) Priorität: **19.05.1999  DE 19923112**

(43) Veröffentlichungstag der Anmeldung:
**13.03.2002   Patentblatt 2002/11**

(73) Patentinhaber: **Fraunhofer-Gesellschaft zur Förderung der angewandten Forschung e.V. 80686 München (DE)**

(72) Erfinder:
  • **GEORG, Andreas**
    **79111 Freiburg (DE)**
  • **HAUCH, Anneke**
    **79111 Freiburg (DE)**

(74) Vertreter: **Gagel, Roland, Dr. Patentanwalt Dr. Roland Gagel, Landsberger Strasse 480a 81241 München (DE)**

(56) Entgegenhaltungen:
**EP-A- 0 887 817          WO-A-91/16719**
**DE-A- 19 816 675**

  • **SVIRIDOV ET AL: "Spectral Sensitization of tungsten trioxide by two dyes separated by a polymer film" STN CHEMICAL ABSTRAC, XP002108473**
  • **BECHINGER C ET AL: "PHOTOELECTROCHROMIC WINDOWS AND DISPLAYS" NATURE,GB,MACMILLAN JOURNALS LTD. LONDON, Bd. 383, Nr. 6601, 17. Oktober 1996 (1996-10-17), Seiten 608-610, XP002064353 ISSN: 0028-0836 in der Anmeldung erwähnt**
  • **YEBKA B ET AL: "Electrochemical Liinsertion in WO3-xTiO2 mixed oxides" SOLID STATE IONICS,NL,NORTH HOLLAND PUB. COMPANY. AMSTERDAM, Bd. 104, Nr. 3-4, 11. Dezember 1997 (1997-12-11), Seiten 169-175, XP004126227 ISSN: 0167-2738**

EP 1 185 992 B1

## Beschreibung

Die vorliegende Erfindung betrifft ein photovoltaisch selbstladendes Speichersystem mit einem Schichtaufbau, bei dem ein erster Stoff, der ein erstes Redoxsystem bildet, ein zweiter Stoff, der ein zweites Redoxsystem bildet, und ein lichtempfindlicher Stoff in oder zwischen einer ersten und einer zweiten elektrisch leitenden Schicht angeordnet sind. Es handelt sich hierbei um ein Mehrschichtsystem, das bei Beleuchtung elektrische Energie elektrochemisch speichern und zu einem späteren Zeitpunkt abgeben kann, um einen elektrischen Verbraucher damit zu betreiben.

Für die genannte Anwendung des Betriebes eines elektrischen Verbrauchers sind gegenwärtig im Stand der Technik photovoltaische Systeme vorgesehen, die die erforderliche Energie direkt an den Verbraucher abgeben. Wird die Energie erst zu einem späteren Zeitpunkt benötigt, so ist bei diesen Systemen eine zusätzliche Batterie zur Speicherung erforderlich.

Die WO 31/16719 betrifft eine derartige photovoltaische bzw. farbstoffsensibilisierte Solarzelle, die auch unter der Bezeichnung Grätzel-Zelle bekannt ist. Die dargestellte Zelle hat einen Aufbau gemäß dem Oberbegriff des Patentanspruches 1, wobei als erstes Redoxsystem eine $TiO_2$-Schicht mit einer Dicke zwischen 0,1 und 50 µm eingesetzt wird. Die Druckschrift befasst sich insbesondere mit der Herstellung zur Verbesserung der Effizienz einer derartigen Solarzelle durch geeignete Wahl des lichtempfindlichen Stoffes. Auch dieses System offenbart jedoch keinen Speicher für elektrische Energie, die den späteren Betrieb eines elektrischen Verbrauchers ermöglichen würde.

Weiterhin sind beispielsweise aus der DE 29 24 079 Anordnungen bekannt, bei denen ein pn-Übergang in Verbindung mit einem Feststoffelektrolyten zur Ladungserzeugung und Speicherung eingesetzt werden. Derartige Systeme haben jedoch den Nachteil eines relativ komplizierten Aufbaus oder einer starken Einschränkung in der Materialwahl.

Die Aufgabe der vorliegenden Erfindung besteht darin, ein photovoltaisch selbstladendes Speichersystem bereitzustellen, das einen einfachen Aufbau aufweist und die Speicherung photovoltaisch bereitgestellter Energie für den Betrieb eines elektrischen Verbrauchers ermöglicht.

Die Aufgabe wird mit dem photovoltaisch selbstladenden Speichersystem des geltenden Patentanspruches 1 gelöst. Vorteilhafte Ausgestaltungen und Weiterbildungen dieses Systems sind Gegenstand der Unteransprüche.

Erfindungsgemäß weist das photovoltaisch selbstladende Speichersystem einen Schichtaufbau auf, bei dem ein erster Stoff, der ein erstes Redoxsystem $A_{ox}$ / $A_{red}$ bildet, ein zweiter Stoff, der ein zweites Redoxsystem $B_{ox}$ / $B_{red}$ bildet, und ein lichtempfindlicher Stoff in oder zwischen einer ersten und einer zweiten elektrisch leitenden Schicht angeordnet sind. Hierbei ist zumindest eine der elektrisch leitenden Schichten für sichtbares Licht transparent. Der erste und der zweite Stoff sind jeweils mit einer der elektrisch leitenden Schichten in elektrischem Kontakt. Erster Stoff, zweiter Stoff und lichtempfindlicher Stoff sind weiterhin derart ausgewählt und innerhalb des Schichtaufbaus angeordnet, daß der lichtempfindliche Stoff unter Einwirkung von Licht Elektronen an das erste Redoxsystem abgibt und aus dem zweiten Redoxsystem wieder aufnimmt, wodurch eine Redoxreaktion $A_{ox} + B_{red} \rightarrow A_{red} + B_{ox}$ induziert (Hinreaktion) wird, die bei Wegfall des Lichtes umgekehrt werden kann (Rückreaktion), und wobei die Rückreaktion wesentlich langsamer abläuft als die Hinreaktion. Dem Fachmann sind hierfür geeignete Stoffkombinationen bekannt. Die Schichtdicke, über die sich der erste und/oder zweite Stoff erstreckt, ist dabei so ausgelegt, daß eine für den Betrieb eines elektrischen Verbrauchers in seiner Kapazität ausreichende, durch die Hinreaktion bewirkte Ladungsspeicherung in dem Schichtaufbau ermöglicht wird.

Das erfindungsgemäße Speichersystem vereint in vorteilhafter Weise in einem Schichtaufbau ein photovoltaisches Element mit einem elektrochemischen Speicher. Hierzu werden ein lichtempfindlicher Stoff, vorzugsweise ein Farbstoff, sowie zwei Redoxpaare $A_{ox}$, $A_{red}$ und $B_{ox}$, $B_{red}$ geeignet verbunden und zwischen zwei elektrisch leitfähigen Schichten angeordnet. Selbstverständlich kann auch einer der Stoffe selbst die elektrisch leitende Schicht bilden bzw. in der elektrisch leitenden Schicht eingebettet sein. Die Aufladung des Speichersystems erfolgt durch die vom lichtempfindlichen Material (Beispiel: Farbstoff) unter Beleuchtung getriebene Reaktion $A_{ox} + B_{red} \rightarrow A_{red} + B_{ox}$. Hierfür wird der Farbstoff (F) vom Licht angeregt und kann ein Elektron e- direkt oder über einen Halbleiter an $A_{ox}$ abgeben. Dies bewirkt die Reduktion von $A_{ox}$. Zur Ladungskompenstion des Farbstoffes nimmt dieser ein Elektron von $B_{red}$ auf (direkt oder indirekt) und oxidiert dadurch $B_{red}$. Diese Vorgänge können durch folgende Formeln ausgedrückt werden:

$$\text{(1) } F + Photon \rightarrow F^* \qquad \text{(Anregung Farbstoff)}$$

$$\text{(2) } F^* + A \rightarrow F^+ \qquad \text{(schnelle Injektion von } e^- \text{ vom Farbstoff zu A; Oxidation von A)}$$

$$\text{(3) } F^+ + B \rightarrow F + B^+ \qquad \text{(Injektion von } e^- \text{ von B zum Farbstoff; Reduktion von B)}$$

Das Funktionsprinzip des Speichersystems besteht darin, daß das lichtempfindliche Material unter Beleuchtung energetisch angeregte Ladungsträger direkt oder indirekt über ein weiteres Material (vgl. z.B.

Anspruch 4) in das Redoxpaar A injiziert und dort zu einer Redoxreaktion führt. Im Falle der Injektion von Elektronen wird A hierbei reduziert. Vom Redoxpaar B erhält das lichtempfindliche Material wieder einen Ladungsträger. Im Falle von Elektronen wird B dadurch oxidiert.

Je nach Schichtaufbau bzw. Schichtabfolge (vgl. z.B. Ansprüche 6, 9 und 13) können beispielsweise - im Falle der Elektroneninjektion durch das lichtempfindliche Material - $A_{red}$ und $B_{ox}$ direkt benachbart vorliegen und eine elektrochemische Doppelschicht bilden, oder ein Gegenion zu einer Komponente des einen Redoxpaares geht zur anderen über und kompensiert so den Ladungstransfer durch das lichtempfindliche Material. In letzterem Fall müssen eventuell vorhandene Zwischenschichten zwischen den Redoxpaaren für das Gegenion durchlässig sein.

Neben dieser Hinreaktion findet bei Redoxreaktionen gleichzeitig ständig die Rückreaktion statt. Durch die Wahl der Materialien sollte sie jedoch stark gehemmt werden. Für die Funktion des erfindungsgemäßen Systems als Speicher ist eine geringe Rate der Rückreaktion in dem Bereich, in dem die Hinreaktion stattfindet, erforderlich. Dem Fachmann sind hierzu zahlreiche Stoffe bekannt, die eine derartige Eigenschaft aufweisen. So zeigt z.B. eine Kombination aus $WO_3$ oder $TiO_2$ als erstes Redoxsystem in Verbindung mit anorganischen Rutheniumverbindungen als lichtempfindlichem Stoff und mit LiI in Propylencarbonat als zweites Redoxsystem eine sehr geringe Rate der Rückreaktion auf.

Die Rückreaktion ist Voraussetzung für die Entladung des Systems. Bei langsamer Rückreaktion kann damit nur ein Verbraucher betrieben werden, der einen sehr geringen Strombedarf hat. Durch eine geeignete externe Verschaltung des Systems in Verbindung mit einem geeigneten Schichtaufbau, wie er im folgenden näher erläutert wird, kann eine räumliche Trennung zwischen Hin- und Rückreaktion herbeigeführt werden. Sieht man am Ort der Rückreaktion ein Katalysatormaterial für die Rückreaktion im Schichtaufbau vor, so kann diese in Abhängigkeit von der externen Verschaltung wesentlich beschleunigt werden und somit größere Stromstärken liefern. Bereits kleinste Zusätze an Platin wirken als Katalysator auf die Rückreaktion der soeben beschriebenen Redoxsysteme.

Für die Funktion des erfindungsgemäßen Speichersystems ist es erforderlich, daß die Schichtdicke, über die sich das erste oder das zweite Redoxsystem erstreckt, groß genug ist, um eine ausreichende Ladungsmenge für den Betrieb eines elektrischen Verbrauchers zu speichern. Hierbei werden vorzugsweise Schichtdicken von 0,1 bis 1 mm oder darüber eingesetzt.

Mit dem photovoltaisch selbstladenden Speichersystem gemäß Anspruch 1 kann somit die einfallende Lichtenergie in einem einfachen Schichtaufbau photovoltaisch umgewandelt und gespeichert werden, um mit der Energie sofort oder zu einem späteren Zeitpunkt einen elektrischen Verbraucher zu betreiben. Dieses System hat neben dem einfachen Aufbau den weiteren großen Vorteil, daß gegenüber den Systemen des Standes der Technik keine zusätzliche Batterie für die Ladungsspeicherung mehr erforderlich ist.

Für den Schichtaufbau können Materialien verwendet werden, wie sie auch bei sogenannten farbstoffsensibilisierten Solarzellen, elektrochromen Systemen und elektrochromen farbstoffsensibilisierten Solarzellen eingesetzt werden. Bei diesen Systemen handelt es sich um optische Bauelemente, die ihre optischen oder elektrischen Eigenschaften reversibel durch Beleuchtung oder externe Beschaltung verändern. Ein derartiges optisches Bauelement ist beispielsweise in "Photoelectrochromic windows and displays", C. Bechinger et. al., Nature, Vol. 383, 17. Oct. 1996, Seiten 608 bis 610 beschrieben. Bei diesem System wird ein Schichtaufbau aus zwei Redoxsystemen und einem Farbstoff verwirklicht, der dem der vorliegenden Erfindung ähnlich ist. Durch Öffnen oder Schließen eines externen Schaltkreises kann hierbei eine Verfärbung einer elektrochromen $WO_3$-Schicht innerhalb des Schichtaufbaus aufrechterhalten oder rückgängig gemacht werden.

Die Dicke der dort vorgesehenen Schichten von weniger als 1 μm macht jedoch die Ladungsspeicherung für den Betrieb eines elektrischen Verbrauchers unmöglich. Hierfür wären wesentlich dickere Schichten erforderlich.

Die beim vorliegenden System verwendeten Stoffe können als Mischung oder durch Aufeinanderbringen in Form von unterschiedlichen Schichten in Schichtaufbau angeordnet werden. Weiterhin können zusätzliche Materialien, in diese Stoffe eingemischt oder als zusätzliche Schicht im Beschichtungsaufbau vorgesehen werden. Durch derartige zusätzliche Materialien, beispielsweise zur besseren Anbindung des lichtempfindlichen Stoffes an das erste Redoxsystem oder zur Steigerung der Geschwindigkeit der Rückreaktion, können die Kinetik der Prozesse und die Stabilität des Systems gefördert werden.

Als Beispiele für Materialien, die Redoxsysteme bilden, können $TiO_2$ oder $WO_3$ als $A_{ox}$, sowie $I_3^-$ und $I^-$ als $B_{ox}$ und $B_{red}$ genannt werden. Das Redoxsystem B kann hierbei beispielsweise in Form von gelöstem LiI und $I_2$ in einer Acetonitrilschicht vorliegen. Die lichtempfindlichen Materialien sind beispielsweise Farbstoffe, wie sie in farbstoffsensibilisierten Solarzellen verwendet werden können, z.B. anorganische Rutheniumverbindungen, Anthocyanine, Chlorophylle oder Perylenfarbstoffe.

Die einzelnen Systeme können, wie bereits ausgeführt, als direkt benachbarte Schichten vorliegen und eine elektrochemische Doppelschicht bilden.

In einer weiteren Ausgestaltung kann vorgesehen sein, daß ein Gegenion zu einer Komponente eines Redoxsystems bei der Redoxreaktion von der Phase dieses Redoxsystems zur Phase des anderen Redoxsystems übergeht und auf diese Weise den Ladungstransfer durch das lichtempfindliche Material kompensiert. Ein Beispiel hierfür ist eine nanoporöse $WO_3$-Schicht als erstes Redoxsystem, auf die eine Monolage einer anorganischen Rutheniumverbindung als lichtempfindliches Material (Farbstoff) aufgebracht ist. Die Poren der $WO_3$-Schicht sind von einem Elektrolyt getränkt, der LiI und $LiI_3$ als Salze enthält (zweites Redoxsystem). Unter Beleuchtung wird $I^-$ vom Farbstoff zu $I_3^-$ oxidiert, während das $Li^+$-Ion in das $WO_3$ wandert, welches zusätzlich vom Farbstoff ein Elektron erhält. Die zweite Redoxreaktion lautet dann $W^{(+6)}O_3 + Li^+ + e^- \rightarrow LiW^{(+5)}O_3$. Zur Verbesserung der Farbstoffanbindung an das erste Redoxsystem kann der Farbstoff auf eine auf dem $WO_3$ zusätzlich angeordnete $TiO_2$-Schicht aufgebracht werden.

In einer bevorzugten Ausführungsform des vorliegenden Speichersystems bilden erster Stoff, zweiter Stoff und lichtempfindlicher Stoff unterschiedliche Schichten, die in einer Schichtreihenfolge aus elektrisch leitender Schicht, erstem Stoff, lichtempfindlichem Stoff, zweitem Stoff, optional einer Katalysatorschicht, und zweiter elektrisch leitender Schicht angeordnet sind. Optional kann zwischen dem ersten Stoff und dem lichtempfindlichen Stoff eine Zwischenschicht vorgesehen sein, um beispielsweise die Anbindung des lichtempfindlichen Stoffes an den ersten Stoff zu verbessern. Einer der beiden Stoffe, die die Redoxsysteme bilden, weist eine gute Leitfähigkeit, vorzugsweise von über 0,01 $(\Omega cm)^{-1}$, auf, der andere eine schlechte Leitfähigkeit von vorzugsweise unter $10^{-4}$ $(\Omega cm)^{-1}$. Hierdurch wird verhindert, daß der Strom nicht über einen extern angeschlossenen Verbraucher, sondern intern zwischen beiden elektrisch leitenden Schichten fließt.

Bei einer zweiten bevorzugten Ausführungsform ist ein Schichtaufbau vorgesehen, bei dem eine Schichtreihenfolge aus elektrisch leitender Schicht, optional einer Zwischenschicht, dem lichtempfindlichen Stoff, optional einem Katalysatormaterial, dem zweiten Stoff, dem ersten Stoff und einer weiteren elektrisch leitenden Schicht realisiert ist. Auch in diesem Fall ist eine der beiden Redoxsysteme bildenden Stoffe gut, der andere schlecht elektrisch leitend. Bevorzugte Leitfähigkeitswerte sind in Zusammenhang mit der vorangehenden Ausführungsform bereits angegeben.

Bei beiden Ausführungsformen wird somit mit einem geeigneten Schichtaufbau eine räumliche Trennung von Hin- und Rückreaktion herbeigeführt, die die Stromführung über einen äußeren Verbraucher ermöglicht.

Weiterhin können als Stoffe die die Redoxsysteme bilden, Materialien eingesetzt werden, die ihre optischen oder elektrischen Eigenschaften mit dem Ladungszustand ändern. Dies sind Stoffe, wie sie beispielsweise bei farbstoffsensibilisierten Solarzellen eingesetzt werden. Hiermit lassen sich die zusätzlichen Effekte dieser bekannten optischen Systeme auch beim vorliegenden System nutzen.

Im folgenden wird die vorliegende Erfindung anhand von Ausführungsbeispielen in Verbindung mit den Figuren nochmals erläutert. Hierbei zeigen:

Fig. 1    schematisch ein Beispiel eines photovoltaisch selbstladenden Speichersystems gemäß einer ersten Ausführungsform der vorliegenden Erfindung; und

Fig. 2    schematisch ein Beispiel eines photovoltaisch selbstladenden Speichersystems gemäß einer zweiten Ausführungsform der vorliegenden Erfindung.

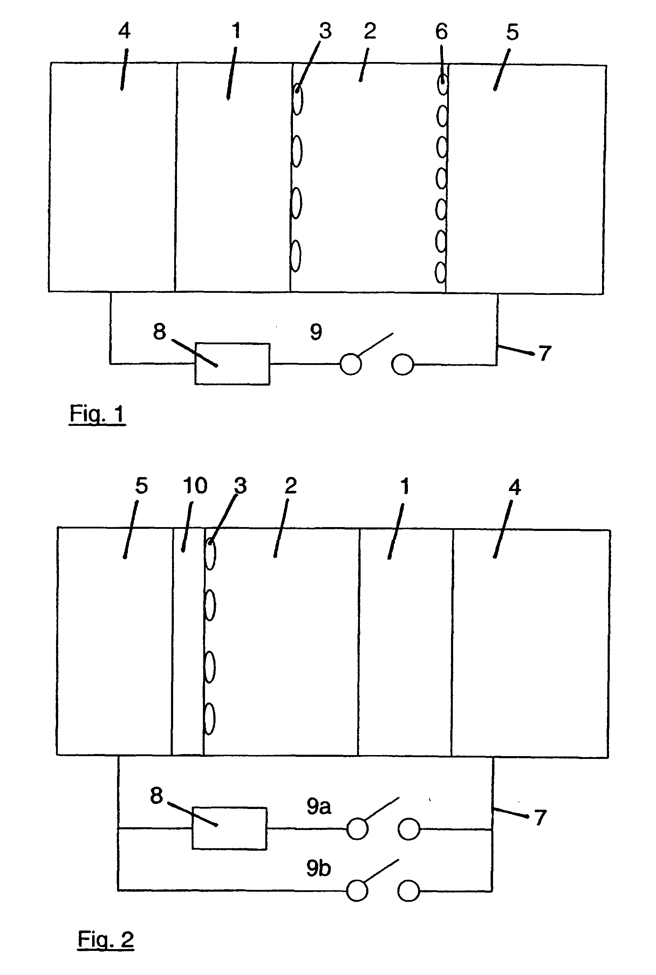

Fig. 1 zeigt ein Ausführungsbeispiel des erfindungsgemäßen Speichersystems, bei dem der das erste Redoxpaar A bildende Stoff 1 und der das zweite Redoxpaar B bildende Stoff 2 als unterschiedliche Schichten vorliegen, die direkten Kontakt zueinander haben. Der Farbstoff 3 ist bei diesem Beispiel direkt auf die Schicht des Redoxpaares A aufgebracht. Die beiden Stoffe 1, 2 liegen zwischen zwei elektrisch leitenden Substraten 4, 5. Diese elektrisch leitenden Schichten 4, 5 sind über einen externen Leiter 7, der einen elektrischen Verbraucher 8 sowie ein Schaltelement 9 enthält, verbunden. Zwischen der das Redoxpaar B beinhaltenden Schicht 2 und dem an diese Schicht angrenzenden leitenden Substrat 5 ist eine dünne Katalysatorschicht 6 vorgesehen, an der die Rückreaktion der Redoxreaktion des Redoxpaares B sehr schnell ablaufen kann. Das Redoxpaar A ist über die elektrisch leitenden Schichten 4, 5 und den externen Leiter 7 mit dieser Katalysatorschicht elektrisch verbunden.

Das Aufladen des Speichersystems erfolgt durch das Induzieren der Redoxreaktion (Hinreaktion) unter Lichteinwirkung bei geöffnetem Schalter 9. Der Ladungsausgleich der Farbstoffschicht erfolgt hierbei durch das Redoxpaar B an der Grenzschicht zum Farbstoff 3. Durch eine geringe elektrische Leitfähigkeit der Schicht 2 mit dem Redoxpaar B kann die Rückreaktion an der Katalysatorschicht 6 bei geöffnetem Schalter 9 nur in sehr geringem Maße erfolgen. Erst bei Schließen des Schalters 9 kann der Ladungstransfer vom Redoxpaar A über die externe Leitung 7 und das Substrat 5 in den durch den Katalysator 6 beeinflußten Bereich der Schicht 2 des Redoxpaares B erfolgen. Dies entspricht der Entladung des Systems über den elektrischen Verbraucher 8, der hierdurch betrieben werden kann.

In diesem Fall wird durch die Katalysatorschicht 6 und die externe Verschaltung 7 eine räumliche Trennung von Hin- und Rückreaktion herbeigeführt, die einen vorteilhaften Einsatz des erfindungsgemäßen Speichersystems zum Betreiben eines elektrischen Verbrauchers ermöglicht.

Zur Verbesserung der Speicherfähigkeit bzw. der Anbindung des Ladungsträgerüberganges vom Farbstoff in das Redoxpaar A kann eine zusätzliche Schicht zwischen der Schicht 1 mit dem Redoxpaar A und der Schicht 3 mit dem Farbstoff eingefügt werden.

In einer weiteren Ausführungsform gemäß Fig. 2 ist die Farbstoffschicht 3 nicht zwischen den Schichten mit den beiden Redoxpaaren, sondern zwischen der Schicht 2 mit dem Redoxpaar B und dem leitenden Substrat 5 vorgesehen. Die ebenfalls in der Figur dargestellte Zwischenschicht 10, die der Verbesserung des Elektronentransfers vom Farbstoff in das elektrisch leitende Substrat und/oder der Vergrößerung der Oberfläche, auf die der Farbstoff angelagert ist, und somit der Lichtabsorption dient, kann auch weggelassen werden. Optional kann auf der Farbstoff- bzw. der Speicherseite der Schicht 2, d.h. der Seite mit der das Redoxpaar A beinhaltenden Schicht, ein Katalysator für die Rückreaktion vorgesehen werden. Dies erhöht die Rate für die Rückreaktion und somit den Entladestrom, vermindert jedoch auch den Ladestrom. In dieser Ausführungsform sind zwei Schalter 9a, 9b in dem die beiden leitenden Substrate 4,5 verbindenden externen Leiter 7 parallel zueinander vorgesehen. In einem der beiden parallelen Zweige des externen Leiters 7 ist der Verbraucher 8 geschaltet. Dieser kann bei entsprechender Schalterstellung unter Beleuchtung direkt ohne Aufladung der Batterie bzw. des Speichersystems mit Strom versorgt werden.

Bei beiden der dargestellten Ausführungsvarianten muß zumindest eines der beiden elektrisch leitenden Substrate 4, 5 für sichtbares Licht transparent sein. Ein Beispiel für ein geeignetes Material mit dieser Eigenschaft ist Fluor-dotiertes Zinn auf Glas.

Während bei den beiden in den Figuren dargestellten Ausführungsformen des Speichersystems die beiden Redoxsysteme A und B in unterschiedlichen Schichten vorliegen, ist auch eine Ausführungsform möglich, bei der sich die beiden Redoxpaare gegenseitig durchdringen. Dies kann durch Bereitstellung einer nanokristallinen $TiO_2$-Schicht als erstem Redoxsystem A erfolgen, in dessen Poren ein flüssiger Elektrolyt mit LiI als Redoxsystem B eingebracht ist. Auch bei einer derartigen Ausgestaltung des Speichersystems ist eine räumliche Trennung von Hin- und Rückreaktion möglich, indem auf jeweils gegenüberliegenden Seiten der die beiden Redoxsysteme enthaltenden Schicht zum einen der Farbstoff und zum anderen ein Katalysatormaterial zwischen der Schicht und der jeweiligen Elektrode aufgebracht sind. Durch eine externe Verschaltung der beiden Elektroden kann dann zwischen Aufladen und Entladen des Speichersystems umgeschaltet werden.

Das besondere an dem erfindungsgemäßen System ist seine elektrische Speicherfähigkeit, die den Einsatz als photovoltaische Batterie ermöglicht. Die Speicherfähigkeit kann insbesondere durch Erhöhung der Schichtdicke des die Ladung speichernden Stoffes noch verbessert werden. So kann die Speicherfähigkeit des auch bei farbstoffsensibilisierten Solarzellen eingesetzten $TiO_2$ durch eine angepaßte Struktur, d.h. beispielsweise durch eine poröse, polymere Struktur statt der für farbstoffsensibilisierte Solarzellen üblichen kolloidalen nanokristallinen Struktur, und eine im Vergleich zu den farbstoffsensibilisierten Solarzellen wesentlich erhöhte Schichtdicke, von 100 μm oder darüber, deutlich verbessert werden. Dies gilt selbstverständlich auch für andere Speichermaterialien.

Die Speicherfähigkeit des Systems kann zusätzlich erhöht werden, indem ein weiteres Material mit guten Ionenspeichereigenschaften in den Schichtaufbau eingebracht wird. Das Speichermaterial sollte weiterhin gewährleisten, daß die Rückreaktion der Redoxreaktion des Redoxpaares B langsam abläuft, damit sich die Batterie nicht in kurzer Zeit selbständig entlädt. Eine Kombination aus den Materialien $TiO_2$ und $WO_3$ ist für die oben beschriebenen Anforderungen besonders gut geeignet.

Die genaue Dimensionierung des erfindungsgemäßen photovoltaisch selbstladenden Speichersystems hängt von den Randbedingungen des jeweiligen Anwendungsfeldes ab. Ein wesentlicher Punkt ist hierbei die vom zu betreibenden elektrischen Verbraucher benötigte elektrische Leistung sowie die Zeit, über die der Verbraucher betrieben werden soll. Im folgenden soll anhand eines Beispiels eine mögliche Dimensionierung der Schichtdicke des Speichermaterials unter bestimmten Randbedingungen angegeben werden.

Soll beispielsweise die einfallende Solarenergie eines Tages für die Nacht gespeichert werden, so beträgt die nötige Speicherkapazität bei einem angenommenen Wirkungsgrad der Energieumwandlung von 4% und einer Lichteinstrahlung von 400 W/m² etwa 100 C/cm² bei einer Spannung in der Größenordnung von 1 V. Beim Einsatz von $WO_3$ als Speichermaterial innerhalb des Schichtaufbaus erfordert dieser Wert bei einer Einlagerung von 0,5 $Li^+$-Ionen pro W-Atom ($Li_{0,5} WO_3$) eine Schichtdicke der $WO_3$-Schicht von ca. 1 mm.

Soll jedoch nur die Solareinstrahlung von 1 Stunde gespeichert werden, so reduzieren sich die erforderliche Speicherkapazität und die Schichtdicke entsprechend um etwa den Faktor 10.

Soll die über einen Tag gespeicherte Energie innerhalb einer Stunde entnommen werden, so entspricht dies bei einer Ladung von ca. 100 C/cm² einem Strom von etwa 10 mA/cm². Mit einer derartigen Ausgestaltung des Speichersystems kann somit ein elektrischer Verbraucher über eine Stunde mit einem Strom von etwa 10 mA pro cm² Fläche der Speicherschicht bei einer Spannung von etwa 1 V, bzw. einer Leistung von 10 mW/cm² bei Serien- oder Parallelschaltung einzelner Zellen, betrieben werden.

Der Durchtrittswiderstand des Katalysators in der Ausführungsform der Fig. 1 sollte hierbei vorzugsweise geringer als 10 Ohm * cm² sein, um den Spannungsabfall an der Katalysatorschicht nicht größer als 0,1 Volt werden zu lassen. Dieser Wert ist mit dünnen Platinschichten (ca. 1 nm dick) als Katalysator für die Redoxreaktion $I^- <-> I_3^- + 2e^-$ gut zu erreichen.

Der Durchtrittswiderstand der Ionenspeicherschicht auf der dem Katalysator gegenüberliegenden Seite der Fig. 1 sollte zum Elektrolyten für die Redoxreaktion in Elektrolyten größer als etwa 1000 Ohm * cm$^2$ sein. Dadurch ist der Ladungsverlust durch selbständige Entladung über diese Grenzschicht kleiner als ein Drittel der Gesamtladung. Auch diese Anforderungen sind mit WO$_3$ oder TiO$_2$ als Redoxsysteme gut erreichbar.

Die Ionenleitfähigkeit der Trägermaterialien der Redoxpaare A und B sollte in obigem Falle des gewünschten Entladestromes von 10 mA/cm$^2$ etwa 0,01 (Ohm * cm)$^{-1}$ betragen. Hierdurch wird ein Spannungsabfall von maximal 0,1 V über die Schichten gewährleistet. Dies entspricht, bei einer Schichtdicke von 1 mm, einer Diffusionskonstante von 10$^{-7}$ cm$^2$/s.

Es versteht sich von selbst, daß diese Dimensionierung nur für den speziellen Fall der Speicherung der Solarenergie eines Tages für die Nacht (unter den gegebenen Randbedingungen) und des Entladens innerhalb einer Stunde mit einem Strom von 10 mA/cm$^2$ gilt. Selbstverständlich gibt es auch Anwendungsfälle, bei denen die Energie nicht über den ganzen Tag aufgenommen werden muß, sondern über kürzere Zeiträume, beispielsweise von einer Stunde oder weniger. Es können auch elektrische Verbraucher betrieben werden, die wesentlich kleinere Leistungen als die als Beispiel dargestellten 10 mA/cm$^2$ bei ca. 1 V, bzw. 10 mW/cm$^2$ bei Serien- oder Parallelschaltung einzelner Zellen, benötigen, oder die über einen kürzeren oder längeren Zeitraum als eine Stunde betrieben werden sollen. Für den Fachmann stellt es hierbei jedoch kein Problem dar, die angegebenen Schichtdicken entsprechend an die geänderten Anforderungen anzupassen. Die weiteren Abmessungen einer bevorzugten Ausführungsform des Speichersystems betragen wenige cm$^2$ bei Kleinverbrauchern bis einige m$^2$ bei größeren Verbrauchern, wie z.B. nicht elektrifizierten Haushalten.

Selbstverständlich kann das System durch Verwendung elektrochromer Stoffe als Redoxpaare neben der Speicherung und Abgabe der elektrischen Energie auch die optischen Eigenschaften ändern, so daß es als Element mit variabler Transmission oder Reflexion zum Überhitzungsschutz oder Blendschutz oder für optische Speicher nutzbar ist.

### Patentansprüche

1. Photovoltaisch selbstladendes Speichersystem mit einem Schichtaufbau, bei dem ein erster Stoff (1), der ein erstes Redoxsystem Aox/Ared bildet, ein zweiter Stoff (2), der ein zweites Redoxsystem Box/Bred bildet, und ein lichtempfindlicher Stoff (3) in oder zwischen einer ersten (4) und einer zweiten elektrisch leitenden Schicht (5) angeordnet sind, wobei

   - zumindest eine der elektrisch leitenden Schichten (4, 5) für sichtbares Licht transparent ist,

   - der erste (1) und der zweite Stoff (2) mit je einer der elektrisch leitenden Schichten (4, 5) in elektrischem Kontakt stehen,

   - der erste (1) Stoff, der zweite Stoff (2) und der lichtempfindliche Stoff derart ausgewählt und innerhalb des Schichtaufbaus angeordnet sind, daß der lichtempfindliche Stoff (3) unter Einwirkung von Licht durch Abgabe von Elektronen an das erste Redoxsystem und Aufnahme von Elektronen aus dem zweiten Redoxsystem eine Redoxreaktion Aox + Bred → Ared + Box als Hinreaktion induziert, die bei Wegfall des Lichtes umgekehrt werden kann, so dass eine Rückreaktion stattfindet, wobei die Rückreaktion langsamer abläuft als die Hinreaktion,

   **dadurch gekennzeichnet,**
   **dass** die Schichtdicke, über die sich der erste (1) und/oder zweite Stoff (2) erstrecken, 100 μm oder darüber beträgt, so daß eine für den Betrieb eines elektrischen Verbrauchers (8) ausreichende, durch die Hinreaktion bewirkte Ladungsspeicherung von zumindest 100 mC/cm$^2$ ermöglicht wird.

2. Speichersystem nach Anspruch 1, **dadurch , gekennzeichnet,**
   **daß** die elektrisch leitenden Schichten (4, 5) über eine externe, schaltbare elektrisch leitende Verbindung (7) miteinander verbunden sind.

3. Speichersystem nach einem der Ansprüche 1 bis 2, **dadurch gekennzeichnet,**
   **daß** der elektrische Kontakt des ersten (1) und/oder des zweiten Stoffes (2) mit je einer der elektrisch leitenden Schichten (4, 5) durch direkten Kontakt oder über eine elektrisch leitfähige Zwischenschicht (10) hergestellt ist.

4. Speichersystem nach einem der Ansprüche 1 bis 3, **dadurch gekennzeichnet,**
   **daß** erster (1) und zweiter Stoff (2) zwei unterschiedliche Schichten bilden oder in zwei unterschiedlichen Schichten eingebettet sind.

5. Speichersystem nach einem der Ansprüche 1 bis 4, **dadurch gekennzeichnet,**
   **daß** der Schichtaufbau eine Schichtabfolge aus erster elektrisch leitender Schicht (4), erstem Stoff (1), lichtempfindlichem Stoff (3), zweitem Stoff (2) und zweiter elektrisch leitender Schicht (5) aufweist, wobei der erste Stoff (1) eine hohe und der zweite Stoff (2) eine geringe elektrische Leitfähigkeit hat oder umgekehrt.

6. Speichersystem nach Anspruch 5, **dadurch gekennzeichnet,**
   **daß** zwischen erstem Stoff (1) und lichtempfindlichem Stoff (3) eine weitere Schicht, insbesondere zur besseren Anbindung des lichtempfindlichen Stoffs, vorgesehen ist.

7. Speichersystem nach Anspruch 5 oder 6, **dadurch gekennzeichnet,** **daß** zwischen zweitem Stoff (2) und zweiter elektrisch leitender Schicht (5) ein Katalysatormaterial (6) für die Rückreaktion vorgesehen ist.

8. Speichersystem nach einem der Ansprüche 1 bis 4, **dadurch gekennzeichnet,** **daß** der Schichtaufbau eine Schichtabfolge aus zweiter elektrisch leitender Schicht (5), lichtempfindlichem Stoff (3), zweitem Stoff (2), erstem Stoff (1) und erster elektrisch leitender Schicht (4) aufweist, wobei der erste Stoff (1) eine hohe und der zweite Stoff (2) eine geringe elektrische Leitfähigkeit hat oder umgekehrt.

9. Speichersystem nach Anspruch 8, **dadurch gekennzeichnet,** **daß** zwischen zweiter elektrisch leitender Schicht (5) und lichtempfindlichem Stoff (3) eine weitere Schicht (10) vorgesehen ist.

10. Speichersystem nach Anspruch 8 oder 9, **dadurch gekennzeichnet,** **daß** zwischen lichtempfindlichem Stoff (3) und zweitem Stoff (2) ein Katalysatormaterial für die Rückreaktion vorgesehen ist.

11. Speichersystem nach einem der Ansprüche 1 bis 3, **dadurch gekennzeichnet,** **daß** erster (1) und zweiter Stoff (2) untereinander vermischt sind.

12. Speichersystem nach einem der Ansprüche 1 bis 3, **dadurch gekennzeichnet,** **daß** der erste Stoff (1) in einer porösen Phase vorliegt, und der zweite Stoff (2) die Poren der porösen Phase zumindest teilweise ausfüllt.

13. Speichersystem nach Anspruch 11 oder 12, **dadurch gekennzeichnet,** **daß** zwischen einer der elektrisch leitenden Schichten (4, 5) und der durch Vermischung bzw. Auffüllung der Poren entstehenden kombinierten Schicht aus erstem (1) und zweitem Stoff (2) ein Katalysatormaterial zur Beschleunigung der Rückreaktion vorliegt, wobei die kombinierte Schicht derart ausgestaltet ist, daß nur der zweite Stoff (2) in Kontakt mit dem Katalysatormaterial ist.

14. Speichersystem nach einem der Ansprüche 1 bis 13, **dadurch gekennzeichnet,** **daß** eine Komponente eines der Redoxsysteme aus einem Ion besteht, zu dem ein Gegenion mit Ladung entgegengesetzten Vorzeichens im Schichtaufbau vorhanden ist, und daß das andere Redoxsystem in einer Phase vorliegt, die die Einlagerung des Gegenions zur Aufrechterhaltung der Ladungsneutralität bei der Redoxreaktion zuläßt.

15. Speichersystem nach einem der Ansprüche 1 bis 14, **dadurch gekennzeichnet,** **daß** der lichtempfindliche Stoff (3) ein Farbstoff ist.

16. Speichersystem nach einem der Ansprüche 1 bis 15, **dadurch gekennzeichnet,** **daß** der Schichtaufbau weitere Materialien in einer zusätzlichen Schicht oder als Beimischung zu einer bestehenden Schicht enthält.

17. Speichersystem nach einem der Ansprüche 1 bis 16, **dadurch gekennzeichnet,** **daß** ein oder beide Redoxsysteme bei der Redoxreaktion ihre elektrischen und/oder optischen Eigenschaften ändern.

18. Speichersystem nach Anspruch 17, **dadurch gekennzeichnet,** **daß** ein oder beide Redoxsysteme elektrochrom sind.

**Claims**

1. A photovoltaically self-charging storage system with a layer structure in which a first material (1), which forms a first redox system $A_{ox}/A_{red}$, a second material (2), which forms a second redox system $B_{ox}/B_{red}$, and a photosensitive material (3) are arranged in or between a first electrically conducting layer (4) and a second electrically conducting layer (5), with

   - at least one of said electrically conducting layers (4,5) being transparent for visible light,
   - said first material (1) and said second material (2) each being in contact with one of said electrically conducting layers (4, 5) respectively,
   - said first material (1), said second material (2) and said photosensitive material being selected in such a manner that under the effect of light said photosensitive material (3) inducing a redox reaction $A_{ox} + B_{red} \rightarrow A_{red} + B_{ox}$ as a direct reaction by releasing electrons to said first redox system and picking up electrons from said second redox system, which reaction can be reversed upon cessation of light in such a manner that a back reaction occurs, with said back reaction running slower than said direct reaction,

**characterised in that** the layer thickness over which said first (1) and /or said second material (2) extend is 100μm or more so that it permits a charge storage effected by said direct reaction of at least 100 mC/cm$^2$ sufficient to operate an electrical consumer (8).

2. A storage system according to claim 1, **characterised in that** said electrically conducting layers (4, 5) are connected to each other via an external, switchable electrically conducting connection (7).

3. A storage system according to one of the claims 1 to 2, **characterised in that** the electrical contact of said first (1) and/or said second material (2) is produced with one of the electrically conducting layers (4, 5) respectively by means of a direct contact or via an electrically conductive intermediate layer (10).

4. A storage system according to one of the claims 1 to 3, **characterised in that** said first material (1) and said second material (2) form two different layers or are embedded in two different layers.

5. A storage system according to one of the claims 1 to 4, **characterised in that** said layer structure possesses a layer sequence of said first electrically conducting layer (4), said first material (1), said photosensitive material (3), said second material (2) and said second electrically conducting layer (5), with said first material (1) having a high electrical conductivity and said second material (2) having a low electrical conductivity or vice versa.

6. A storage system according to claim 5, **characterised in that** a further layer is provided between said first material (1) and said photosensitive material (3), in particular, for better bonding of the photosensitive material.

7. A storage system according to claim 5 or 6, **characterised in that** a catalyst material (6) for said back reaction is provided between said second material (2) and said second electrically conducting layer (5).

8. A storage system according to one of the claims 1 to 4, **characterised in that** said layer structure has a layer sequence of said second electrically conducting layer (5), said photosensitive material (3), said second material (2), said first material (1) and said first electrically conducting layer (4), with said first material (1) having a high electrical conductivity and said second material (2) a low electrical conductivity or vice versa.

9. A storage system according to claim 8, **characterised in that** a further layer (10) is provided between said second electrically conducting layer (5) and said photosensitive layer (3).

10. A storage system according to claim 8 or 9, **characterised in that** a catalyst material for said back reaction is provided between said photosensitive material (3) and said second material (2).

11. A storage system according to one of the claims 1 to 3, **characterised in that** said first material(1) and said second material (2) are mixed.

12. A storage system according to one of the claims 1 to 3, **characterised in that** said first material (1) is in a porous phase and said second material (2) at least partly filling the pores of said porous phase.

13. A storage system according to claim 11 or 12, **characterised in that** a catalyst material for accelerating the back reaction is between one of said electrically conducting layers (4, 5) and said combined layer of said first material (1) and said second material (2) created by mixing respectively filling the pores, with a combined layer being configured in such a manner that only said second material (2) is in contact with said catalyst material.

14. A storage system according to one of the claims 1 to 13, **characterised in that** one component of one of said redox systems is an ion, for which there is a counter ion with an opposite charge in said layer structure and said other redox system is in a phase which permits storing said counter ion to maintain charge neutrality in said redox reaction.

15. A storage system according to one of the claims 1 to 14, **characterised in that** said photosensitive material (3) is a coloring matter.

16. A storage system according to one of the claims 1 to 15, **characterised in that** said layer structure contains further materials in an additional layer or as an additive to one of the present layers.

17. A storage system according to one of the claims 1 to 16, **characterised in that** one or both redox systems alter their electrical and/or optical properties in said redox reaction.

**18.** A storage system according to claim 17, **characterised in that** one or both redox systems are electrochromic.

## Revendications

**1.** Système de stockage à autochargement photovoltaïque avec une construction en couches dans lequel on trouve disposées : une première matière (1) formant un premier système redox $A_{ox} / A_{red}$, une deuxième matière (2) formant un deuxième système redox $B_{ox} / B_{red}$ et une matière (3) sensible à la lumière dans ou entre une première (4) et une deuxième couche (5) conductrice d'électricité où :

- au moins une des couches (4, 5) conductrice d'électricité est transparente à la lumière,
- la première (1) et la deuxième matière (2) se trouvent en un contact électrique avec chacune des couches ( 4, 5) conductrices d'électricité,
- la première matière (1), la deuxième matière (2) et la matière sensible à la lumière ont été choisies et disposées à l'intérieur de la construction en couches de manière à ce que la matière (3) sensible à la lumière induit une réaction redox $A_{ox} + B_{red} \rightarrow A_{red} + B_{ox}$ comme réaction aller sous l'effet de la lumière par l'émission d'électrons vers le premier système redox et la réception d'électrons à partir du deuxième système redox ; laquelle réaction aller peut être inversée lors d'omission de la lumière, de manière à ce qu'une réaction de retour ait lieu ; la réaction de retour se déroulant plus doucement plus que la réaction aller,

**caractérisé en ce que**,
l'épaisseur de la couche sur laquelle s'étendent la première (1) et / ou la deuxième matière (2), s'élève à 100 µm ou plus de manière à permettre un stockage de charge suffisant, générée par la réaction aller d'au moins 100 mC/cm$^2$ pour le fonctionnement d'un consommateur (8) électrique.

**2.** Système de stockage selon la revendication 1, **caractérisé en ce que** les couches (4, 5) conductrices d' électricité sont reliées entre elles par une liaison (7) conductrice d'électricité susceptible d'être connectée de l'extérieur.

**3.** Système de stockage selon une des revendications 1 à 2, **caractérisé en ce que** le contact électrique de la première (1) et / ou la deuxième matière (2) est crée par une des couches (4, 5) conductrices d'électricité par un contact direct ou par une couche intermédiaire (10) capable de conduire de l'électricité.

**4.** Système de stockage selon une des revendications 1 à 3, **caractérisé en ce que** la première (1) et la deuxième matière (2) forment deux couches différentes ou sont noyées dans deux couches différentes.

**5.** Système de stockage selon une des revendications 1 à 4, **caractérisé en ce que** la construction en couches présente une succession de couches composées de : une première couche (4) conductrice d'électricité, d'une première matière (1), d'une matière sensible à la lumière (3), d'une deuxième matière (2) et d'une deuxième couche (5) conductrice d'électricité ; la première matière (1) ayant une capacité conductrice élevée et la deuxième matière (2) ayant une faible capacité conductrice et vice-versa.

**6.** Système de stockage selon la revendication 5, **caractérisé en ce qu'**entre la première matière (1) et la matière (3) sensible à la lumière, on a prévu une autre couche, notamment pour améliorer la liaison de la matière sensible à la lumière.

**7.** Système de stockage selon la revendication 5 ou 6, **caractérisé en ce qu'**entre la deuxième matière (2) et une deuxième couche (5) conductrice d'électricité, on a prévu un matériau catalyseur (6) pour la réaction de retour.

**8.** Système de stockage selon une des revendications 1 à 4, **caractérisé en ce que** la construction en couches présente une suite de couches composées de : d'une deuxième couche (5) conductrice d'électricité, d'une matière sensible à la lumière (3), d'une deuxième matière (2), d'une première matière (1) et d'une première couche (4) conductrice d'électricité ; la première couche (1) ayant une capacité /conductivité électrique élevée et la deuxième couche (2) ayant une faible conductivité électrique et vice-versa.

**9.** Système de stockage selon la revendication 8, **caractérisé en ce qu'**entre la deuxième couche conductrice d'électricité (5) et la matière (3) sensible à la lumière, on a prévu une autre couche (10).

**10.** Système de stockage selon la revendication 8 ou 9, **caractérisé en ce qu'**entre la matière (3) et la deuxième matière (2), on a prévu un matériau catalyseur pour la réaction de retour.

**11.** Système de stockage selon une des revendications 1 à 3, **caractérisé en ce qu'**une première (1) et deuxième (2) matière sont mélangées entre elles.

**12.** Système de stockage selon une des revendications 1 à 3, **caractérisé en ce que** la première matière (1) se trouve dans une phase poreuse et la deuxième matière (2) remplit au moins en partie les pores de la phase poreuse.

**13.** Système de stockage selon la revendication 1 ou 12, **caractérisé en ce qu'**entre une des couches (4, 5) conductrices d'électricité et la couche combinée générée par un mélange ou un remplissage des pores à partir d'une première (1) et d'une deuxième (2) matière , on trouve un matériau catalyseur pour accélérer la réaction de retour ; la couche combinée étant réalisée afin que seule la deuxième matière (2) est en contact avec le matériau catalyseur.

**14.** Système de stockage selon une des revendications 1 à 13, **caractérisé en ce qu'**un composant d'un des systèmes redox est composé d'un Ion pour lequel existe un contre-ion avec une charge de signe opposé et **en ce qu'**un autre système redox existe dans une phase qui autorise l'introduction du contre-ion pour maintenir la neutralité de charge lors de la réaction redox.

**15.** Système de stockage selon une des revendications 1 à 14, **caractérisé en ce que** la matière (3) sensible à la lumière est un pigment.

**16.** Système de stockage selon une des revendications 1 à 15, **caractérisé en ce que** la construction en couches, comprend d'autres matériaux dans une couche supplémentaire ou mélangés à une couche déjà existante.

**17.** Système de stockage selon une des revendications 1 à 16, **caractérisé en ce qu'**un ou les deux systèmes de réaction changent leurs propriétés électriques et / ou optiques lors de la réaction redox.

**18.** Système de stockage selon la revendication 17, **caractérisé en ce qu'**un ou les deux systèmes redox sont électrochromes.

EP 1 185 992 B1

Fig. 1

Fig. 2

11